# EUROPEAN PATENT APPLICATION

(11) **EP 1 441 245 A2**
(43) Date of publication of application: **28.07.2004**
(21) Application number: 04001315.3
(22) Date of filing: 22.01.2004
(51) Int. Cl.: G02B 6/16

(54) **Optical fiber**

(30) Priority: 22.01.2003 KR 2003004311
(71) Applicant: Samsung Electronics Co., Ltd., Suwon-si, Gyeonggi-do (KR)
(72) Inventor: Oh, Sung-Koog Samsung Electronics Co., Ltd., Suwon-si, Gyeonggi-do (KP); Lee, Jae-Ho Samsung Electronics Co., Ltd., Suwon-si, Gyeonggi-do (KP)
(74) Representative: Lang, Johannes, Dipl.-Ing.

(57) **Abstract**

An optical fiber capable of being applied to both the WDM mode and CWDM mode and meeting the transmission characteristics employed in the metro networks is provided. The optical fiber includes a refractive profile and comprises a core area extended along a predetermined reference axis, and a cladding area formed around the external circumference of the core area, wherein the radii of the core area and cladding area and the refractive profile are selected so that the optical fiber has following characteristics: a zero dispersion wavelength in the range of 1300 to 1350 nm; a dispersion value in the range of 13 to 18 ps/nm·km at 1550 nm wavelength; a zero dispersion wavelength in the range of 0.046 to 0.079 ps/nm²·km; and, an effective cross-section area of 70 µm² or more.

## Description

### BACKGROUND OF THE INVENTION

### 1. Field of the Invention

The present invention relates to an optical fiber, and in particular to an optical fiber applicable to both of a Wavelength-Division-Multiplexing (WDM) mode and a Coarse Wavelength-Division-Multiplexing (CWDM) mode and, at the same time, meets the transmission characteristics employed in the metro networks.

### 2. Description of the Related Art

An optical fiber comprises a core and a clad, which encloses the core, and the refractive index of the core is higher than that the clad. As part of manufacturing process, a optical perform prepared and drawn under a heat application to produce a string of optical fiber. Some of the known methods for preparing a optical preform includes a MCVD (Modified Chemical Vapor Deposition) method, VAD (Vapor Axial Deposition) method, OVD (outside Vapor Deposition) method, PECVD (Plasma Enhanced Chemical Vapor Deposition) method, etc. Optical fibers have different characteristics depending on the required transmission lengths and applications. For use in long-haul networks, NZ-DSFs (Non-Zero Dispersion Shifted Fibers) and SMFs (Single Mode Fibers) are mainly used.

Meanwhile, metro networks employ various types of protocols, for example, Ethernet for the transmission of larger data, such as sound/moving image in the networks of high speed Ethernet, gigabit Ethernet, ESCON (Enterprise System Connection), FICON (Fiber Connection), etc. Metro networks mainly use a bit rate in the range of OC-3 (155 Mbit/sec) to OC-192 (10 Gbit/sec) and must be applicable to currently used transmission systems, which includes the CWDM and Dense WDM schemes. Accordingly, the metro networks require more elaborate technical requirements when compared to the long-haul transmission networks, thereby causing the cost of network constructions to increase. In order to save costs, various optical fibers are incorporated in a cable, such as a hybrid cable, to meet the demands.

Note that the dispersion values of conventional single mode optical fibers are in the range of about 17 to 18 ps/nm·km at 1550 nm wavelength, and due to high dispersion values, there is a limit in efforts to narrow the signal intervals. Therefore, in consideration of such dispersion, it has become necessary to interpose DCFs (Dispersion-Compensated Fibers) in order to compensate for the dispersion in the transmission networks.

In this regards, the present invention has been made to solve the above-mentioned problems occurring in the prior art and provides additional advantages, by providing an improved optical cable that may be realized in a simple, reliable, and inexpensive implementation.

### SUMMARY OF THE INVENTION

The present invention is directed to an optical fiber that has a dispersion value in the range of 13 to 18 ps/nm·km, and a zero-dispersion slope in the range of 0.046 to 0.079 ps/nm²·km and in a wavelength region of 1550 nm to 1580 nm.

One aspect of the present invention to provide an optical fiber capable of being applied to both the WDM mode and CWDM mode and meets the transmission requirements employed in the metro networks.

In one embodiment, an optical fiber having a refractive profile is provided and includes a core area extended along a predetermined reference axis, and a cladding area formed around the external circumference of the core area, wherein the radii of the core area and cladding area and the refractive profile are selected such that the optical fiber has the following characteristics: a zero dispersion wavelength in the range of 1300 to 1350 nm; a dispersion value in the range of 13 to 18 ps/nm·km at 1550 nm wavelength; a zero dispersion wavelength in the range of 0.046 to 0.079 ps/nm²·km; and, an effective cross-section area of 70 µm² or more.

Preferably, the radii of the core area, the cladding area, and the refractive profile are selected so that the optical fiber has a negative dispersion value in the range of - 6.5 to -1.3 ps/nm·km at 1270 nm wavelength.

More preferably, the radii of the core area, the cladding area, and the refractive profile are selected so that the optical fiber has a dispersion value in the range of 14.5 to 24.5 ps/nm·km at 1610 nm wavelength.

### BRIEF DESCRIPTION OF THE DRAWINGS

The above features and advantages of the present invention will be more apparent from the following detailed description taken in conjunction with the accompanying drawings, in which:
- FIG. 1a: is a cross-sectional view of a depressed clad type optical fiber in accordance with a preferred embodiment of the present invention;
- FIG. 1b: is a graph illustrating the distribution of refractive indexes of the optical fiber shown in FIG. 1a in accordance with the radius of the optical fiber;
- FIG. 2a: is a cross-sectional view of a index matched clad type optical fiber in accordance with another preferred embodiment of the present invention;
- FIG. 2b: is graph illustrating the distribution of refractive indexes of the optical fiber shown in FIG. 2a in accordance with the radius of the optical fiber; and,
- FIG. 3: is a graph illustrating the range of proper dispersion values of the optical fibers manufactured in accordance with the present invention.

### DETAILED DESCRIPTION OF THE PREFERRED EMBODIMENTS

Hereinafter, preferred embodiments of the present invention will be described with reference to the accompanying drawings. For the purposes of clarity and simplicity, a detailed description of known functions and configurations incorporated herein will be omitted as it may make the subject matter of the present invention unclear.

An optical fiber according to the teachings of the present invention may be used in the Coarse Wavelength-Division-Multiplexing (CWDM) scheme and exhibits a geometrical structure and optical characteristics similar to a single mode fiber (SMF). In addition, the cut-off wavelength and radius of the inventive optical fiber are similar to the SMF , instead of the long-haul DWDM. However, the zero-dispersion wavelength of the inventive optical fiber is in the range of 1300 to 1350 nm and its dispersion value is in the range of 13 to 18 ps/nm·km at 1550 nm wavelength. Accordingly, the inventive optical fiber comprises a lower dispersion value compared to the conventional single mode optical fiber, which has a dispersion value of 18 ps/nm·km at 1550 nm wavelength.

Moreover, the inventive optical fiber has a dispersion slope in the range of 0.046 to 0.079 ps/nm²·km at a zero-dispersion wavelength, which is also lower than the dispersion slope of the conventional single mode optical fiber, which is about 0.091 ps/nm²·km at a zero-dispersion wavelength. The inventive optical fiber has an effective cross-section area (Aeff) of about 70 µm² , a dispersion value in the range of -6.5 to -1.3 ps/nm·km at 1270 nm wavelength, and a dispersion value in the range of 14.5 to 24.5 ps/nm·km at 1610 nm.

Furthermore, although the dispersion in an optical fiber is mainly influenced by the radius and structure of the optical fiber, the inventive optical fiber has a structure similar to that of the conventional single mode optical fiber. Therefore, it is possible to apply the inventive optical fiber to both the WDM mode and CWDM mode, by selectively tuning the radius and refractive index of the optical fiber. As such, it is also possible to realize an optical fiber that meets optical characteristics employed in the metro networks.

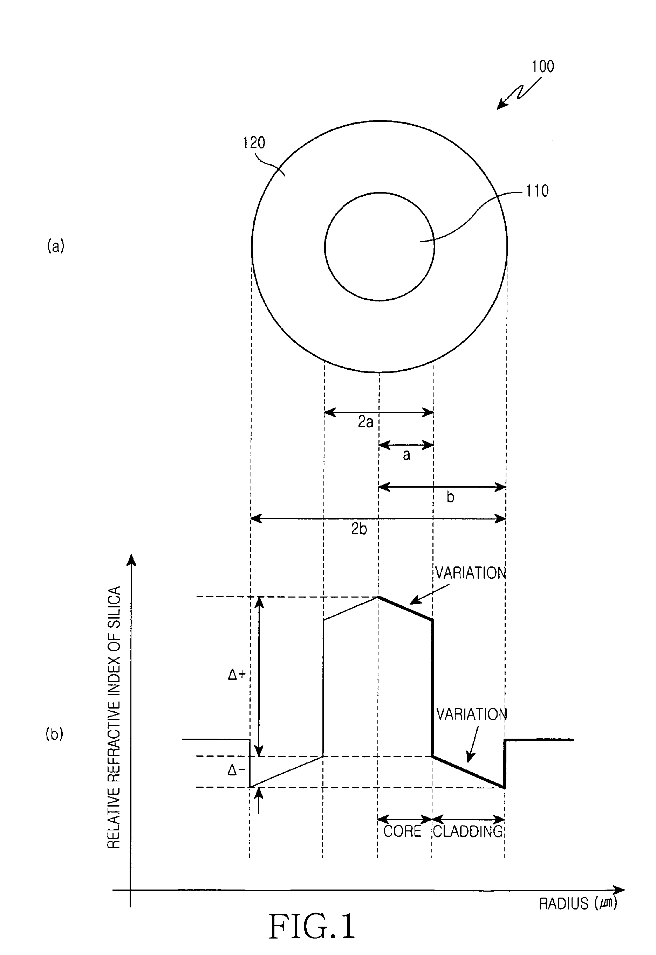

FIG. 1a is a cross-sectional view of a depressed clad type optical fiber in accordance with a preferred embodiment of the present invention, and FIG. 1b is a graph, which shows the distribution of refractive indexes of the optical fiber shown in FIG. 1a in accordance with the radius of the optical fiber.

Referring to FIG. 1a, an optical fiber 100 in accordance with the embodiment of the present invention includes a core area 110 and a cladding area 120 formed around the external circumference of the core area 110.

Referring to FIG. 1b, Δ+ and Δ- indicate the relative refractive indexes, and the of silica (Si), i.e., 1.457 variation indicates the decrement of the refractive index. In the figure of the present embodiment, the core was designed to have refractive index change 0.0005 decrement outwardly. The refractive index of core decreases outwardly from the center of the core. The cladding was designed to have refractive index change. The refractive index of clad decrease outwardly.

Hereinafter, specific examples of the present invention will be presented for tuning various characteristics of an optical fiber, by setting the diameter of the optical fiber constant while varying the refractive index of the optical fiber. I The radius a of the core is 4.47 µm and the radius b of the cladding is 10.12 µm.

### Example 1

In this example, the relative refractive index Δ+ and the variation of the core equal 0.0030 and 0.0005, respectively, and the refractive index Δ- and variation of the cladding are -0.0010/ -0.0005, respectively. As stated earlier, the relative refractive index shown in the drawing is the refractive index of silica (Si), 1.457. The transmission characteristics of an optical fiber designed in this manner are indicated in Table 1.

**Table 1**

| Δ+/ variation | Δ-/ variation | Zero-dispersion wavelength (nm) | Zero-dispersion slope | Effective area (Aeff) (µm²) | 1270nm dispersion | 1550 -1580nm band dispersion | 1610 nm dispersion |
|---|---|---|---|---|---|---|---|
| 0.0030/ 0.0005 | -0.0010/ -0.0005 | 1327.5 | 0.0764 | 89.1935 | -4.7573 | 13.0394 -14.3010 | 15.4396 |

### Example 2

In this example, the relative refractive index Δ+ and the variation of the core equal 0.0035 and 0.0005, respectively, and the refractive index Δ- and the variation of the cladding are -0.0015 and -0.0005, respectively. The transmission characteristics of an optical fiber designed in this manner are indicated in Table 2.

**Table 2**

| Δ+/ variation | Δ-/ variation | Zero-dispersion wavelength (nm) | Zero-dispersion slope | Effective area (Aeff) (µm²) | 1270nm dispersion | 1550-1580nm band dispersion | 1610 nm dispersion |
|---|---|---|---|---|---|---|---|
| 0.0035/ 0.0005 | -0.0015/ -0.0005 | 1311.0 | 0.0785 | 72.0319 | -3.5579 | 14.6093 -15.8856 | 17.0202 |

### Example 3

In this example, the relative refractive index Δ+ and the variation of the core equal 0.0035 and 0.0005, respectively, and the refractive index Δ- and the variation of the cladding equal -0.0013 and -0.0005, respectively. The transmission characteristics of an optical fiber designed in this manner are indicated in Table 3.

**Table 3**

| Δ+/ variation | Δ-/ variation | Zero-dispersion wavelength (nm) | Zero-dispersion slope | Effective Area (Aeff) (µm²) | 1270nm dispersion | 1550-1580nm band dispersion | 1610 nm dispersion |
|---|---|---|---|---|---|---|---|
| 0.0035/ 0.0005 | -0.0013/ -0.0005 | 1313.0 | 0.0789 | 73.7900 | -3.7272 | 14.7217-16.0818 | 17.3212 |

### Example 4

In this example, the relative refractive index Δ+ and the variation of the core equal 0.0037 and 0.002, respectively, and the refractive index Δ- and the variation of the cladding equal -0.0013 and -0.0005, respectively. The transmission characteristics of an optical fiber designed in this manner are indicated in Table 4.

**Table 4**

| Δ+/ variation | Δ-/ variation | Zero-dispersion wavelength (nm) | Zero-dispersion slope | Effective area (Aeff) (µm²) | 1270nm dispersion | 1550-1580nm band dispersion | 1610 nm dispersion |
|---|---|---|---|---|---|---|---|
| 0.0037/ 0.002 | -0.0013/ -0.0005 | 1312.0 | 0.0769 | 75.5870 | -3.6000 | 13.5123 -14.7265 | 15.7916 |

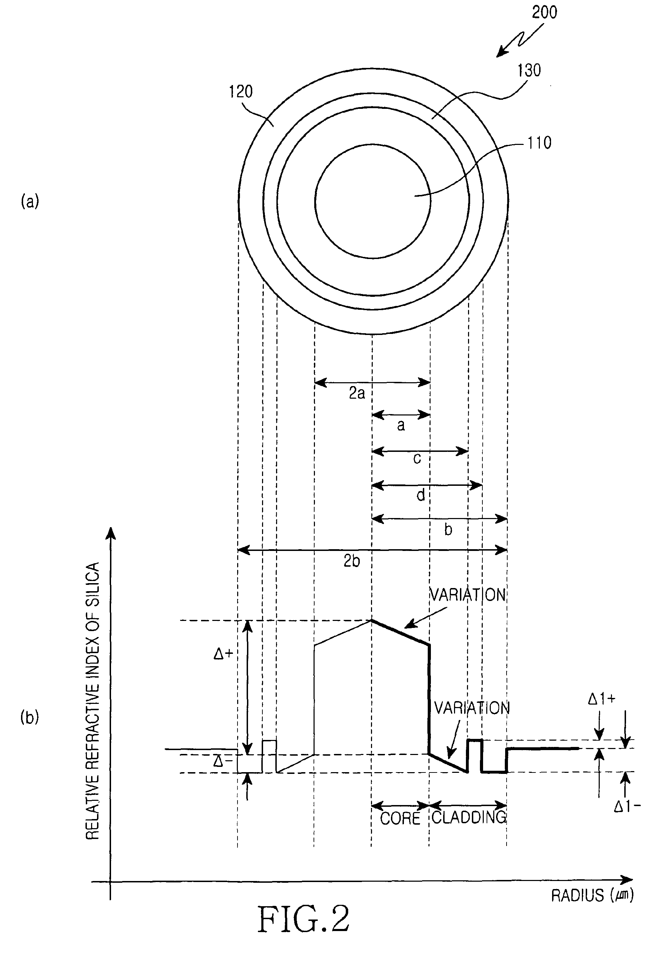

FIG. 2a is a cross-sectional view of a index matched clad type optical fiber in accordance with another preferred embodiment of the present invention, and FIG. 2b is graph showing the distribution of the refractive indexes of the optical fiber shown in FIG. 2a in accordance with the radius of the optical fiber.

Referring to FIG. 2a, an optical an optical fiber 200 in accordance with the embodiment comprises a core area 110 which extends along a predetermined reference axis and a cladding area 120 formed on the external circumference of the core area 110. The cladding area 120 includes a ring type cladding area 130 which has a higher refractive index than the remaining area.

Referring to FIG. 2b, Δ+ and Δ- indicate the relative refractive indexes of silica (Si), as in FIG. lb. Hereinafter, specific examples of the present invention will be presented for tuning various characteristics of an optical fiber, by setting the diameter of the optical fiber constant while varying the refractive indexes of the optical fiber. The radius a of the core is set to 4.47 µm, the radius b of the cladding is set to 10.12 µm, and the internal radius c and external radius d of the ring type cladding area are set to 7.12 µm and 8.12 µm, respectively.

### Example 5

In this example, the relative refractive index Δ+ and the variation of the core equal 0.0030 and 0.0005, respectively, and the refractive index Δ- and the variation of the cladding equal -0.0010/ -0.0005, respectively. As described above, the relative refractive index is referenced to the refractive index of silica. In the ring type cladding area, Δ1+ and variation equal 0.000 and 0.0, respectively and Δ- and variation equal 0.001 and 0.0, respectively. The transmission characteristics of an optical fiber designed in this manner are indicated in Table 5.

**Table 5**

| Δ+ / variation | Δ- / variation | Δ1+/ variation | Δ1-/ variation | Zero-dispersion wavelength (nm) | Zero-dispersion slope | Effective area (Aeff) (µm²) | 1270nm dispersion | 1550-1580nm band dispersion | 1610 nm dispersion |
|---|---|---|---|---|---|---|---|---|---|
| 0.0030/0.0005 | -0.0010/-0.0005 | 0.0000/0.0000 | -0.001/0.0000 | 1330 | 0.0755 | 84.3746 | -4.9866 | 13.0197 -14.3321 | 15.5311 |

### Example 6

In this example, the relative refractive index Δ+ and the variation of the core equal 0.0030 and 0.0005, respectively, and the refractive index Δ- and the variation of the cladding equal -0.0010 and -0.0005, respectively. In the ring type cladding area, Δ1+ and variation equal 0.010 and 0.0000, respectively, and Δ- and variation equal -0.001 and 0.0000, respectively. The transmission characteristics of an optical fiber designed in this manner are indicated in Table 5.

**Table 6**

| Δ+/ variation | Δ- / variation | Δ1+ / variation | Δ1- / variation | Zero-dispersion wavelength (nm) | Zero-dispersion variation | Effective area (Aeff) (µm²) | 1270nm dispersion | 1550-1580nm band dispersion | 1610 nm dispersion |
|---|---|---|---|---|---|---|---|---|---|
| 0.0030/ 0.0005 | -0.0010 /-0.0005 | 0010/ 0.0000 | -0.001/ 0.0000 | 1336.6 | 0.0711 | 88.08 93 | -5.5493 | 13.2957-14.8195 | 16.2664 |

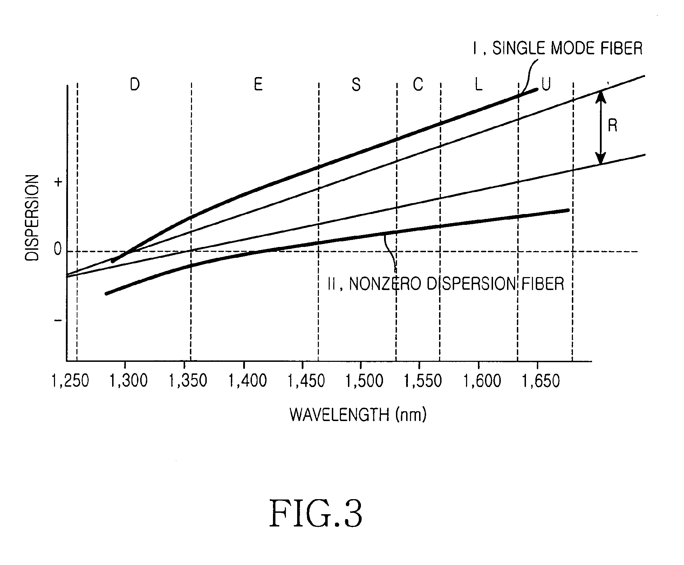

FIG. 3 is a graph which shows a range of proper dispersion values for the optical fibers in accordance with the present invention. As shown, it can be appreciated that a proper dispersion value is ranged between a dispersion value (I) of a standard SMF and a dispersion value (II) of a nonzero dispersion optical fiber(NZDSF) over substantially all bands (D, E, S, C, L, U).

An optical fiber (for CWDM) in accordance with the present invention is intended for a longer distance transmission when compared to an SMF but not so long as DWM, so that it may be used for an intermediate range transmission. Note that the cut-off wavelength and radius of the optical fiber of the present invention are similar to those of an SMF. Therefore, the dispersion slope of the optical fiber according to the teachings of the present invention is somewhat higher than dispersion slope of NZDSF because it is not used for the long-haul transmission.

The inventive optical fiber has dispersion values in the range of 13 to 18 ps/nm·m in the 1550 to 1580 wavelength band, which are lower than those of the existing standard SMF, so that it is possible to reduce optical signal spreading caused by the dispersion over a broad bandwidth compared with SMF.
In addition, the inventive optical fiber is also advantageous in that because it has a large effective area, it is possible to greatly reduce the non-linear phenomena compared with NZDSF which may be produced in WDM transmission. As such, the present invention can reduce the costs for constructing communication networks.

Accordingly, the present invention is capable of being applied to both the WDM mode and CWDM mode and meets the transmission characteristics employed in metro networks. Therefore, it is possible to substitute the inventive optical fiber for the existing optical fibers. Hence one type of an optical fiber meets various demands according to the teachings of the present invention, it is possible to further reduce the costs for constructing metro networks. A Metro network needs a fiber which has large bandwidth and long-length transmission. The inventive optical fiber has a larger bandwidth than that of NZDSF(using CWDM) and it can realize long-length transmission compared with SMF.

While the invention has been shown and described with reference to certain preferred embodiments thereof, it will be understood by those skilled in the art that various changes in form and details may be made therein without departing from the spirit and scope of the invention as defined by the appended claims.

## Claims

1. An optical fiber having a refractive profile comprising:
a core area extended along a predetermined reference axis;
a cladding area formed around the external circumference of the core area, wherein the radii of the core area and cladding area and the refractive profile are selectively selected so that the optical fiber has the following characteristics:
a zero dispersion wavelength in the range of 1300 to 1350 nm;
a dispersion value in the range of 13 to 18 ps/nm·km at 1550 nm wavelength;
a zero dispersion wavelength in the range of 0.046 to 0.079 ps/nm²·km; and,
an effective cross-section area of 70 µm² or more.

2. The optical fiber according to claim 1, wherein the radii of the core area and cladding area and the refractive profile are selectively selected so that the optical fiber has a negative dispersion value in the range of -6.5 to -1.3 ps/nm·km at 1270 nm wavelength.

3. The optical fiber according to claim 1, wherein the radii of the core area and cladding area and the refractive profile are selectively selected so that the optical fiber has a dispersion value in the range of 14.5 to 24.5 ps/nm·km at 1610 nm wavelength.

4. The optical fiber according to claim 1, wherein the optical fiber is a depressed clad type optical fiber.

5. The optical fiber according to claim 1, wherein the optical fiber is a index matched clad type optical fiber.

6. The optical fiber according to claim 1, wherein the radius of the core is 4.45 to 4.5 µm and the radius of the cladding is 10 to 10.3 µm.
